# EUROPÄISCHE PATENTANMELDUNG

(11) **EP 1 410 716 A2**
(43) Veröffentlichungstag der Anmeldung: **21.04.2004**
(21) Anmeldenummer: 03020234.5
(22) Anmeldetag: 06.09.2003
(51) Int. Cl.: A21B 1/46, A21B 1/26

(54) **Backofen**

(30) Priorität: 18.10.2002 DE 10248675
(71) Anmelder: Werner & Pfleiderer Lebensmitteltechnik GmbH, 91550 Dinkelsbühl (DE)
(72) Erfinder: Blümel, Frank, 91614 Mönchsroth (DE); Dannenhauer, Bernd, 91550 Dinkelsbühl (DE); Knost, Dieter, 91550 Dinkelsbühl (DE)
(74) Vertreter: Rau, Manfred, Dr. Dipl.-Ing.

(57) **Zusammenfassung**

Ein Backofen (1) dient der Zubereitung von Backgut (3). Dieses wird einem Backraum (11a) durch eine Zugabeöffnung zuführt und verlässt diesen durch eine Ausgabeöffnung. Eine Umluft-Einrichtung des Backofens (1) umfasst eine einen Umluftstrom erzeugende Umluftquelle (24), eine Umluft-Heizeinrichtung (26) und einen Umluft-Führungskanal (42a), der abschnittsweise durch den Backraum (11a) gebildet ist. Von der Zugabeöffnung zur Ausgabeöffnung werden Backgut-Träger (7) mit einer Transporteinrichtung (23a) transportiert. Dabei können Backgut-Träger (7) transportiert werden, die gleichzeitig zur Warenauslage im Rahmen des Verkaufes des zubereiteten Backguts (3) verwendet werden. Es resultiert eine einfachere Handhabung des Backguts (3) vor, während und nach dem Backvorgang.

## Beschreibung

Ein derartiger Backofen ist durch offene Vorbenutzung sowie durch die DE 195 39 856 A1 bekannt. Dort wird das Backgut auf großen, fahrbaren Backwagen durch den Backofen transportiert. Dies bedingt einen großbauenden Backofen, welcher insbesondere nicht in Verkaufsräumen von Bäckereien aufgestellt werden kann. Zudem ist es erforderlich, das Backgut vom Backwagen auf andere Backgut-Träger für die Warenauslage umzuladen, was einen zusätzlichen Aufwand erfordert.

Es ist daher die Aufgabe der vorliegenden Erfindung, einen Backofen der eingangs genannten Art derart weiterzubilden, dass die Handhabung des Backguts vor, während und nach dem Backen vereinfacht ist.

Diese Aufgabe ist erfindungsgemäß gelöst durch die im Kennzeichnungsteil des Anspruches 1 angegebenen Merkmale.

Erfindungsgemäß wurde erkannt, dass Backgut-Träger gleichzeitig das Backgut im Backofen und auch später bei der Warenauslage tragen können. Es ist daher nicht mehr notwendig, das Backgut nach dem Backen auf einen neuen Träger umzulagern. Gleichzeitig kann ein Backofen, bei dem zur Warenauslage geeignete Backgut-Träger eingesetzt werden können, kompakt ausgeführt sein.

Eine Transporteinrichtung gemäß Anspruch 2 ist kompakt realisierbar und zudem so elegant, dass der Backofen durchaus im Verkaufsraum einer Bäckerei zum Einsatz kommen kann.

Transportmittel gemäß Anspruch 3 bieten größere Freiheiten bei der Backofenkonstruktion.

Transportmittel gemäß Anspruch 4 sind luftdurchlässig und gleichzeitig robust.

Eine Spanneinrichtung gemäß Anspruch 5 gewährleistet einen sicheren Betrieb der Transporteinrichtung.

Eine Auswurfeinrichtung gemäß Anspruch 6 bietet die Möglichkeit, die Backgut-Träger vom Backofen zu einer Warenauslage automatisch zu transportieren.

Eine Umluftsteuereinrichtung gemäß Anspruch 7 schafft gleichmäßigere Backverhältnisse für das auf dem Backgut-Träger abgelegte Backgut. Über die Umströmung des Backguts längs mindestens zweier vorgegebener Strömungswege mitteln sich Temperaturgradienten der Umluft längs der Umluftströmung aus.

Eine Umluft-Lenkeinheit gemäß Anspruch 8 lässt sich mit relativ geringem Aufwand herstellen.

Eine Umluft-Steuerung gemäß Anspruch 9 lässt sich einfach realisieren.

Eine Ausführungsform das Backofens nach Anspruch 10 erleichtert zu Beginn eines Backvorganges das Aufheizen des Backraumes.

Alternativ oder zusätzlich zur bevorzugten Ausführungsform nach Anspruch 10 kann eine Beschwadungseinrichtung nach Anspruch 11 vorgesehen sein. Die Beschwadungseinrichtung führt zu einer kontrollierten Befeuchtung des Backgutes, was zu einer Verbesserung des Backergebnisses führt. In Verbindung mit der Vakuumpumpe lässt sich mit der Beschwadungseinrichtung ein gleichmäßigeres Befeuchten des Backgutes realisieren, was das Backergebnis nochmals verbessert.

Ein Ausführungsbeispiel der Erfindung wird nachfolgend anhand der Zeichnung näher erläutert. In dieser zeigen:

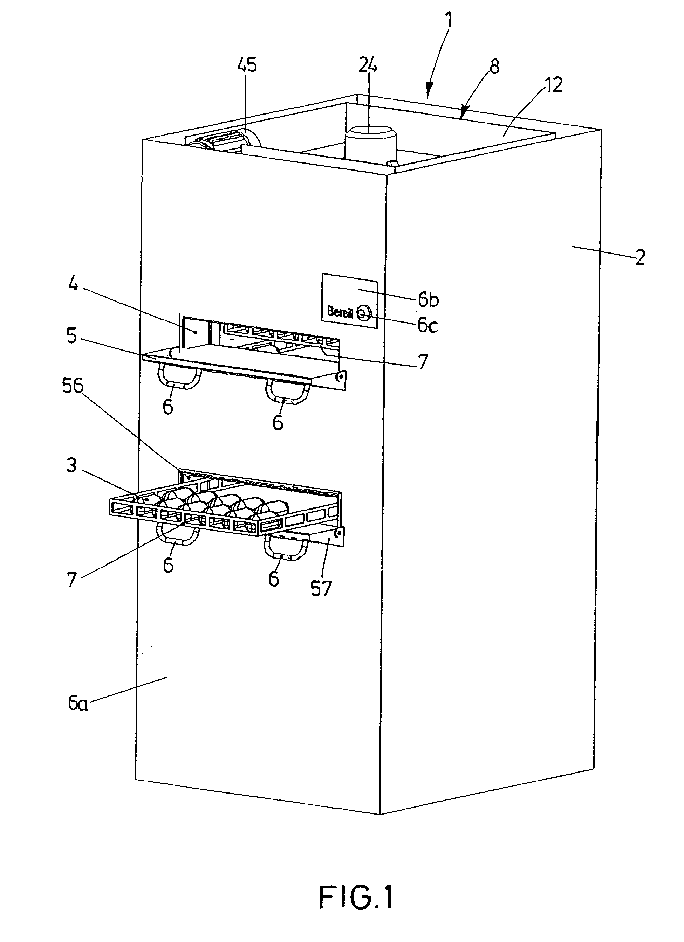

- Fig. 1: Eine perspektivische Ansicht eines Backofens;
- Fig. 2: eine zu Fig. 1 ähnliche Ansicht des Backofens mit abgenommenem Außengehäuse;

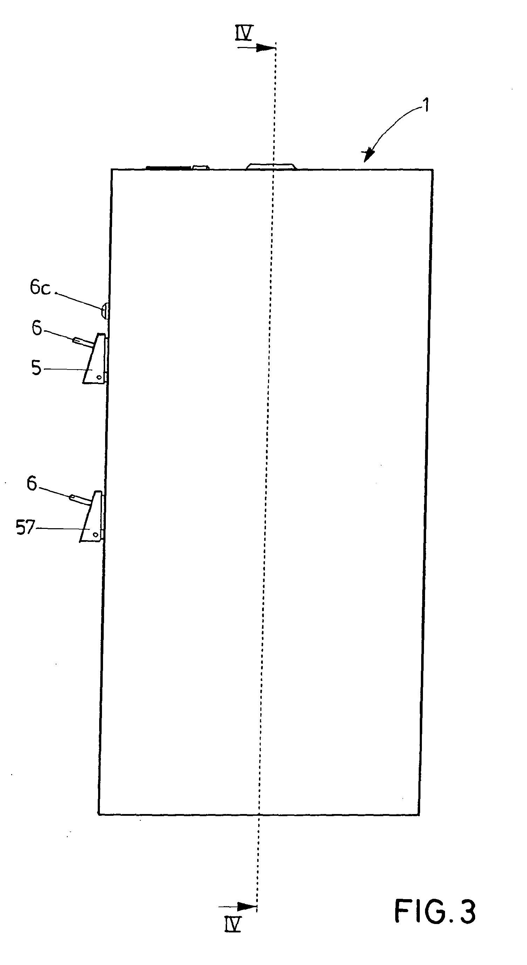

- Fig. 3: eine Seitenansicht des Backofens; und
- Fig. 4: einen Schnitt durch den Backofen gemäß Linie IV-IV in Fig. 3.

Der in der Zeichnung insgesamt mit dem Bezugszeichen 1 bezeichnete Backofen weist ein Außengehäuse 2 auf, welches eine quadratische Grundfläche von 1 qm einnimmt und eine Höhe von ca. 2 m hat. Backgut 3, z. B. tief- oder teilgefrorene Brötchen, gelangt über eine rechteckige Zugabeöffnung 4, die manuell von einer Zugabetür 5 mit zwei Bediengriffen 6 verschlossen werden kann, ins Innere des Backofens 1. Die Zugabeöffnung 4 ist in einer Stirnwand 6a des Außengehäuses 2 ausgeführt. Diese Stirnwand 6a trägt außerdem ein Schaltmodul 6b mit einem Bedienknopf 6c zur Bedienung des Backofens 1. Das Backgut 3 wird dem Backofen 1 chargenweise zugegeben. Eine Charge von z. B. 24 Brötchen wird dazu auf einen Backgut-Träger 7 in Form eines Warenauslagekorbes aufgelegt. Der Backgut-Träger 7 hat eine Breite von 610 mm und eine Tiefe von 640 mm. Die Breite sowie die Höhe des Backgut-Trägers 7 entsprechen den Abmessungen der Zugabeöffnung 4 derart, dass das Backgut 3 mitsamt dem Backgut-Träger 7 durch die Zugabeöffnung 4 passt.

Mit der Zugabeöffnung 4 fluchtend ist in einem Innengehäuse 8 des Backofens 1 eine Zugabe-Durchtrittsöffnung 9 ausgeführt. Das Innengehäuse 8 hat ebenfalls eine quadratische Grundfläche und ist mehrteilig aufgebaut. Auf einem Traggestell 10 ist dazu zunächst ein Backraumgehäuse 11 und auf diesem ein Heizquellengehäuse 12 montiert.

Im Innenraum des Backraumgehäuses 11 sind miteinander fluchtende Paare von Tragschienen 13 für Backgut-Träger 7 angeordnet. Eines dieser Paare fluchtet mit der Zugabeöffnung 4 und der Zugabe-Durchtrittsöffnung 9, sodass der durch diese Öffnungen 4, 9 durchgeschobene Backgut-Träger 7 beiderseits auf jeweils einer Tragschiene 13 aufliegt und dadurch von dem Paar von Tragschienen 13 getragen wird. Die Tragschienen 13 werden ihrerseits von zwei Transportbändern 14 in Form zweier Endlos-Transportketten getragen, die jeweils um zwei vertikal übereinander angeordnete Umlenkrollen 15 umgelenkt sind. Alternativ zu Transportketten können auch andere luftdurchlässige Materialien für die Transportbänder 14 zum Einsatz kommen, z. B. ein hitzebeständiges Gewebematerial. Die Enden der Umlenkrollen 15 sind in Lagerboxen 15 a gelagert, welche an den Stirnwänden des Innengehäuses 8 festgelegt sind. Die Transportbänder 14 sind beiderseits im Backraumgehäuse 11 so angeordnet, dass die Backgut-Träger 7 zwischen den Transportbändern 14 auf den Tragschienen 13 aufliegen, wobei der Abstand zwischen den den Backgut-Trägern 7 zugewandten Transportabschnitten der Transportbänder 14 etwas größer ist als die Breite der Backgut-Träger 7. Jedes der beiden Transportbänder 14 trägt jeweils eine Tragschiene 13 eines einen Backgut-Träger 7 tragenden Paares von Tragschienen 13.

Zwischen den Umlenkrollen 15 jeweils eines Transportbandes 14 ist eine Spannrolle 16 angeordnet, welche die Transportbänder 14 unter Spannung hält.

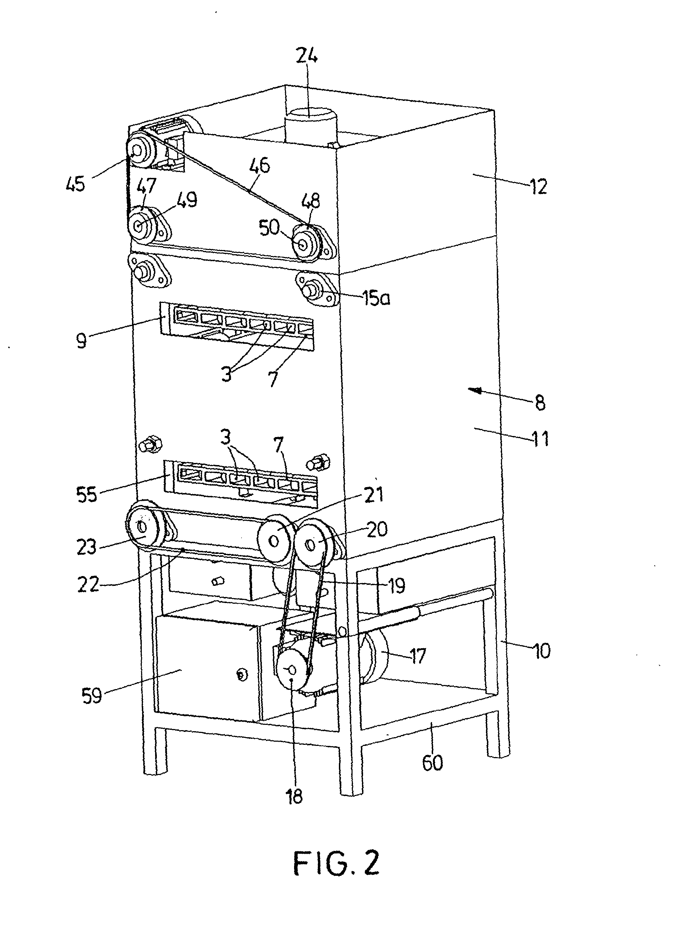

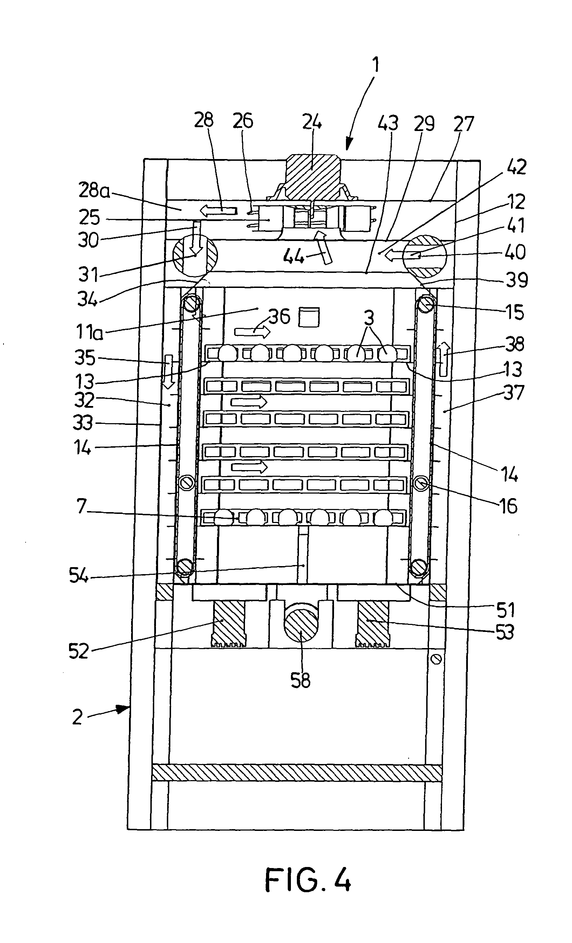

Jeweils die unteren der Umlenkrollen 15 eines Transportbandes 14 werden von einem Band-Antriebsmotor 17, einem Elektromotor, angetrieben, der am Traggestell 10 montiert ist. Dieser weist ein Antriebsritzel 18 auf, welches über einen Antriebsriemen 19 und ein Transmissionszahnrad 20, welches endseitig auf der in den Fig. 2 und 4 unten rechts angeordneten Umlenkrolle 15 drehfest angebracht ist, letztere antreibt. In der in Fig. 2 gezeigten Ansicht drehen sich das angetriebene erste Transmissionszahnrad 20 und damit die Umlenkrollen 15 des rechten Transportbandes 14 entgegen dem Uhrzeigersinn.

Das erste Transmissionszahnrad 20 treibt über ein mit diesem kämmendes zweites Transmissionszahnrad 21 und einen Transmissionsriemen 22 ein drittes Transmissionszahnrad 23 an, welches endseitig drehfest mit der in den Fig. 2 und 4 links unten angeordneten Umlenkrolle 15 verbunden ist. Die Transmissionszahnräder 20, 21 und 23 haben gleiche Zahnzahl, sodass sich das dritte Transmissionszahnrad 23 mit gleicher Winkelgeschwindigkeit dreht wie das erste Transmissionszahnrad 20, allerdings mit umgekehrtem Drehsinn, also im Uhrzeigersinn. Bei einer Betätigung des Band-Antriebsmotors 17 bewegen sich daher die die Backgut-Träger 7 tragenden Paare von Tragschienen 13 gemeinsam nach unten, sodass die Backgut-Träger 7 von oben nach unten durch das Backraumgehäuse 11 transportiert werden. Die Transportbänder 14 mit den Tragschienen 13 sowie der Antrieb für diese bilden gemeinsam eine Transporteinrichtung 23a. Die Backgutträger 7 werden von der Transporteinrichtung 23a von oben nach unten in ähnlicher Weise transportiert wie die Aufzug-Zellen eines Paternosters.

Während des Transports wird das Backgut 3 von Umluft umströmt. Diese wird erzeugt von einer Umluftquelle 24 mit einem angetriebenen Gebläserotor 25 und beheizt von einer Heizspirale 26. Die Umluftquelle 24 wird von einem wärmeisoliertem Zwischenboden 27 im Heizquellengehäuse 12 getragen.

Fig. 4 zeigt einen ersten Strömungsweg für die erzeugte Umluft durch den Backraum im Backraumgehäuse 11.

Die von der Umluftquelle 24 erzeugte Umluft strömt zunächst, wie in Fig. 4 durch einen Strömungsrichtungspfeil 28 angedeutet, durch eine erste Umluftkammer 28a, die zwischen dem Zwischenboden 27 und einem parallel hierzu darunter angeordneten zweiten Zwischenboden 29 ausgebildet ist. Anschließend strömt die Umluft, wie durch einen Strömungsrichtungspfeil 30 angedeutet, nach unten durch ein erstes Ventilelement 31 mit zylindrischem Zweiwege-Ventilkörper. Letzteres ist um eine horizontale Achse, die mit der Längsachse des zylindrischen Ventilkörpers zusammenfällt, drehbar und ist so drehpositioniert, dass es eine vertikale Strömungsverbindung zwischen der ersten Umluftkammer 28a und einer zweiten Umluftkammer 32 freigibt. Diese ist seitlich begrenzt durch eine in Fig. 4 linke Seitenwand 33 des Backraumgehäuses 11 und einen dieser benachbart laufenden Förderabschnitt des in Fig. 4 linken Transportbandes 14 sowie oberhalb dieses Förderabschnitts von einem schräg verlaufenden Luftleitblech 34, welches zwischen der in Fig. 4 linken oberen Umlenkrolle 15 und dem ersten Ventilelement 31 ausgebildet ist.

Wie durch einen Strömungsrichtungspfeil 35 in Fig. 4 angedeutet, strömt die Umluft in die zweite Umluftkammer 32 und von dort durch das luftdurchlässige, in Fig. 4, linke Transportband 14 hindurch in den Backraum 11a, wobei es, wie durch Strömungsrichtungspfeile 36 in Fig. 4 angedeutet, das Backgut 3 umströmt, wobei dieses gebacken wird. Nach Umströmen des Backguts 3 durchtritt die Umluft das in Fig. 4 rechts angeordnete Transportband 14 und strömt durch eine spiegelbildlich zur zweiten Umluftkammer und in Fig. 4 rechts des rechten Transportbandes 14 ausgebildete dritte Umluftkammer 37, wie in Fig. 4 durch einen Strömungsrichtungspfeil 38 angedeutet, nach oben. Hierbei strömt es an einem die dritte Umluftkammer 37 ebenfalls begrenzenden Luftleitblech 39 vorbei, welches spiegelbildlich schräg zum Luftleitblech 34 zwischen der in Fig. 4 rechts oben angeordneten Umlenkrolle 15 und einem darüber angeordneten zweiten Ventilelement 40 montiert ist. Letzteres ist in gleicher Weise wie das erste Ventilelement 31 ausgebildet, diesem gegenüber jedoch um 90° verdreht drehpositioniert, sodass es eine horizontale Strömungsverbindung für die Umluft vorgibt. Die Umluft strömt daher, wie in Fig. 4 durch einen Strömungsrichtungspfeil 41 angedeutet, von der dritten Umluftkammer 37 in eine vierte Umluftkammer 42. Diese ist in Fig. 4 seitlich begrenzt durch die beiden Ventilelemente 31 und 40, nach oben begrenzt durch den zweiten Zwischenboden 29 und nach unten begrenzt durch einen die beiden Luftleitbleche 34 und 39 verbinden den dritten Zwischenboden 43 des Heizquellengehäuses 12. Die Umluftkammern 28a, 32, 37, 42 bilden gemeinsam mit dem Backraum 11a einen Umluft-Führungskanal 42a.

In der genannten Drehposition des ersten Ventilelementes 31 dichtet dieses zwischen dem zweiten Zwischenboden 29 und dem dritten Zwischenboden 43 die vierte Umluftkammer 42 ab, sodass die Umluft, wie durch einen Strömungsrichtungspfeil 44 in Fig. 4 angedeutet, angesaugt durch den Gebläserotor 25, wieder in die erste Umluftkammer 28a einströmt.

Die Ventilelemente 31 und 34 werden getaktet zwischen den vorstehend beschriebenen ersten Drehpositionen, in denen sie den ersten Strömungsweg freigeben, und zweiten Drehpositionen, die gegenüber den ersten Drehpositionen jeweils um 90° verdreht sind, in denen sie einen zweiten Strömungsweg freigeben, umgeschaltet. Bei diesem zweiten Strömungsweg gibt das erste Ventilelement 31 einen horizontalen Durchlass frei und das zweite Ventilelement 40 gibt einen vertikalen Durchlass frei, sodass bei dem zweiten Strömungsweg die Umluft von der ersten Umluftkammer 28a zunächst in die dritte Umluftkammer 37, dann durch das rechte Transportband 14 in den Backraum 11a, von diesem durch das linke Transportband 14 in die zweite Umluftkammer 32 und von dort durch das erste Ventilelement in die vierte Umluftkammer 42 und angesaugt durch den Gebläserotor 25 wieder in die erste Umluftkammer 28a strömt. Backgut, welches in Fig. 4 bezüglich der beiden Transportbänder 14 außermittig angeordnet ist, wird durch dieses Umschalten der Strömungswege während der halben Beströmungsdauer z. B. von Umluft umströmt, welche einen geringeren Weg durch den Backraum 11 a zurückgelegt hat, und in der anderen Hälfte der Beströmungsdauer von Umluft, welche einen weiteren Weg durch den Backraum 11a zurückgelegt hat. In Kombination mit dem Transport der Backgut-Träger 7 von oben nach unten durch den Backraum 11a ergibt dies unabhängig von der jeweiligen Position des einzelnen Backguts 3 auf dem Backgut-Träger 7 integral vergleichbare Backverhältnisse, sodass jede Backgut-Charge auf den Backgut-Trägern 7 gleichmäßig durchgebacken wird. Temperaturgradienten der Umluft längs der beiden Strömungswege werden auf diese Weise ausgeglichen.

Beim Umschalten zwischen den Strömungswegen werden die Ventilelemente 31, 40 mittels eines Ventilelement-Antriebsmotors 45 verdreht. Dieser ist auf dem ersten Zwischenboden 27 des Heizquellengehäuses 12 montiert und treibt über einen Antriebsriemen 46 Transmissionszahnräder 47, 48 an, die drehfest mit Wellen 49, 50 verbunden sind, die ihrerseits drehfest mit den Ventilelementen 31, 40 verbunden sind und mit deren Drehachsen fluchten.

Unterhalb eines Backraumbodens 51 sind, getragen vom Traggestell 10, zwei Beschwadungsmodule 52, 53 angeordnet. Diese dienen der Erzeugung von Wasserdampf-Schwaden, mit denen das Backgut 3 im Backraum 11a gesteuert während des Backvorganges befeuchtet werden kann.

Wenn der Backgut-Träger 7 am Ende seines Transportweges nach unten im Backraum 11a vorliegt, wird er von einem Auswurf-Greifer 54, der in Fig. 4 schematisch dargestellt ist, durch eine Ausgabe-Durchtrittsöffnung 55 im Backraumgehäuse 11 und eine hiermit fluchtende Ausgabeöffnung 56 im Außengehäuse 2 aus dem Backofen 1 ausgeworfen. Die Ausgabe-Durchtrittsöffnung 55 sowie die Ausgabe-Öffnung 56 sind in der Stirnwand 6a unterhalb der Zugabeöffnung 4 und der Zugabe-Durchtrittsöffnung 9 angeordnet und ansonsten entsprechend diesen Öffnungen ausgebildet. Die Ausgabe-Öffnung 56 kann von einer Ausgabetür 57 verschlossen werden, die wie die Zugabetür 5 ausgebildet ist und ebenfalls Bediengriffe 6 aufweist. Der Auswurf-Greifer 54 wird von einem Auswurf-Aktuator 58 betätigt, der zwischen den Beschwadungsmodulen 52, 53 angeordnet ist und vom Traggestell 10 getragen wird.

Nach dem Auswerfen aus der Ausgabeöffnung 56 wird das gebackene Backgut 3 zu einer Warenauslage in einer Bäckerei weitertransportiert, ohne dass es hierzu den Backgut-Träger 7 verlassen muss.

Der Band-Antriebsmotor 17, die Umluftquelle 24, der Ventilelement-Antriebsmotor 45, die Beschwadungsmodule 52, 53 sowie der Auswurf-Aktuator 58 werden von einem zentralen Steuermodul 59 während des Backvorganges angesteuert, welches von einem Zwischenboden 60 des Traggestells 10 getragen ist.

Beim Backvorgang können entweder kontinuierlich mit Backgut 3 bestückte Backgut-Träger 7 dem Backofen 1 zugeführt werden oder es können diskontinuierlich nach Bedarf entsprechende Backgut-Chargen verarbeitet werden. Hierzu kann der Backofen 1 ständig in Betrieb bleiben, sodass er jederzeit verfügbar ist. Die Transportgeschwindigkeit der Transportbänder 14 ist derart, dass alle vier Minuten ein neuer Backgut-Träger 7 dem Backofen 1 zugeführt werden kann, aber nicht zugeführt werden muss. Bei einer Belegung eines Backgut-Trägers 7 mit 24 Teiglingen entspricht dies einer Backgut-Stundenleistung von 360 Stück. Auch andere Stundenleistungen, z. B. 240 Stück, sind möglich. Über die Transportgeschwindigkeit der Transportbänder 14 kann die Backzeit eingestellt werden. Die Backzeit kann z. B. zwischen 20 und 30 Minuten variiert werden.

Eine nicht dargestellte Ausführungsform des Backofens 1 weist zusätzlich eine Vakuumpumpe auf, mit der im Backraum 11a ein vorgegebener Unterdruck einstellbar ist. Zu Beginn des Backvorganges wird bei dieser Ausführungsform der Backraum 1 1a mit der Vakuumpumpe zunächst abgepumpt, sodass das dort befindliche Backgut 3 anschließend durch die Umluft schneller beheizt werden kann. Durch das Zusammenspiel der Vakuumpumpe mit den Beschwadungsmodulen 52, 53 wird zudem eine effizientere Befeuchtung des Backgutes durch die Schwaden erzielt.

## Patentansprüche

1. Backofen (1)
- mit einer Zugabeöffnung (4, 9) zur Zugabe von Backgut (3),
- mit einem Backraum (11a),
- mit einer Ausgabeöffnung (55, 56) zur Ausgabe von Backgut (3),
- mit einer Umluft-Einrichtung, welche umfasst
-- eine einen Umluftstrom erzeugende Umluftquelle (24),
-- eine Umluft-Heizeinrichtung (26),
-- einen Umluft-Führungskanal (42a), der abschnittsweise durch den Backraum (11a) gebildet ist,
- mit einer Transporteinrichtung (23a), welche Backgut-Träger (7) von der Zugabeöffnung (4, 9) zur Ausgabeöffnung (55, 56) transportiert,
**dadurch gekennzeichnet, dass**
die Transporteinrichtung (23a) derart ausgeführt ist, dass Backgut-Träger (7) transportiert werden können, die gleichzeitig zur Warenauslage im Rahmen des Verkaufs des gebackenen Backguts (3) verwendet werden können.

2. Backofen nach Anspruch 1, **dadurch gekennzeichnet, dass** die Transporteinrichtung (23a) mindestens zwei parallel zueinander angeordnete, angetriebene, endlos umlaufende, flexible Transportmittel (14) mit von diesen getragenen Halteelementen (13) aufweist, zwischen denen die Backgut-Träger (7) beim Transport gehalten sind.

3. Backofen nach Anspruch 2, **dadurch gekennzeichnet, dass** die Transportmittel (14) luftdurchlässig ausgeführt sind und im Umluft-Führungskanal (42a) angeordnet sind.

4. Backofen nach Anspruch 2 oder 3, **dadurch gekennzeichnet, dass** die Transportmittel (14) als Transportketten ausgeführt sind.

5. Backofen nach einem der Ansprüche 3 bis 4, **gekennzeichnet durch** eine Spanneinrichtung (16) zum Spannen der Transportmittel (14).

6. Backofen nach einem der Ansprüche 1 bis 5, **dadurch gekennzeichnet, dass** die Transporteinrichtung (23a) eine Auswurfeinrichtung (54, 58) für Backgut-Träger (7) aus der Ausgabeöffnung (55, 56) aufweist.

7. Backofen nach einem der Ansprüche 1 bis 6, **gekennzeichnet durch** eine Umluft-Steuereinrichtung mit mindestens einer Umluft-Lenkeinheit (31, 40), die derart zwischen mindestens zwei Stellpositionen verlagerbar ist, dass die Umluft längs eines bestimmten von mindestens zwei vorgegebenen Strömungswegen **durch** den Umluft-Führungskanal (42a) strömt.

8. Backofen nach Anspruch 7, **dadurch gekennzeichnet, dass** die Umluft-Lenkeinheit (31, 40) als Ventilelement mit einem zylindrischen Zweiwege-Ventilkörper (31, 40) ausgebildet ist, wobei vorzugsweise zwei Ventilelemente (31, 40) vorgesehen sind.

9. Backofen nach Anspruch 7 oder 8, **dadurch gekennzeichnet, dass** die Umluft-Steuereinrichtung ein Steuermodul (59) aufweist, welches derart ausgebildet ist, dass der Strömungsweg der Umluft getaktet zwischen den verschiedenen vorgebbaren Strömungswegen umgeschaltet wird.

10. Backofen nach einem der Ansprüche 1 bis 9, **gekennzeichnet durch** eine an den Backraum (11a) angeschlossene und gesteuert zuschaltbare Vakuumpumpe, mit der im Backraum ein vorgegebener Unterdruck einstellbar ist.

11. Backofen nach einem der Ansprüche 1 bis 10, **gekennzeichnet durch** eine an dem Backraum (11a) angeschlossene und gesteuert zuschaltbare Beschwadungseinrichtung (52, 53) mit der der Backraum (1 la) mit Schwaden versorgt werden kann.
